# EUROPÄISCHE PATENTSCHRIFT

(11) **EP 0 916 244 B1**
(45) Veröffentlichungstag und Bekanntmachung des Hinweises auf die Patenterteilung: **18.02.2004**
(21) Anmeldenummer: 98121094.1
(22) Anmeldetag: 06.11.1998
(51) Int. Cl.: A01B 63/10, A01B 63/32, A01B 63/22

(54) **Hub- und Tiefensteuersystem für Anbaugeräte**
Raise and lower control system for appended implements
Système de contrôle pour lever et baisser un instrument agricole accroché

(30) Priorität: 18.11.1997 US 972925
(43) Veröffentlichungstag der Anmeldung: 19.05.1999
(73) Patentinhaber: DEERE & COMPANY, Moline, Illinois 61265-8098 (US)
(72) Erfinder: Noonan, James Thomas, Johnston, IA 50131 (US); Payne, David Alan, Urbandale, IA 50322 (US); Parker, Paul David, Ankeny, IA 50021 (US)
(74) Vertreter: Lau-Loskill, Philipp, Dipl.-Phys.

(56) Entgegenhaltungen:
- EP-A- 0 494 516
- DE-A- 4 235 380
- FR-A- 2 191 831
- US-A- 2 707 867
- US-A- 4 413 685

## Beschreibung

Die Erfindung betrifft ein Hub- und Tiefensteuersystem für ein an eine Zugmaschine anhängbares landwirtschaftliches Arbeitsgerät, wobei das Steuersystem einen sich quer zur Fahrtrichtung erstreckenden Werkzeuge tragenden Rahmen und mehrere in Längs-und Querrichtung zueinander beabstandete Hubeinrichtungen für Radbungruppen zum Anheben und Absenken des Rahmens aufweist. Das Steuersystem enthält mit den Hubeinrichtungen gekoppelte Hydraulikzylinder und eine Anordnung von Steuerventilen, die mit den Hydraulikzylindern und mit einer Hydraulikdruckquelle in Verbindung steht, um wahlweise die Hydraulikzylinder aus- und einzufahren, so daß die Hubeinrichtungen den Rahmen anheben oder absenken.

Die vorliegende Erfindung bezieht sich allgemein auf ein landwirtschaftliches Arbeits- oder Anbaugerät und im besonderen auf ein Hub- und Tiefensteuersystem für solch ein Arbeitsgerät.

Bei den meisten bekannten, mehrere Rahmen enthaltenen Arbeitsgeräten, wie beispielsweise Feldgrubber und Meißelpflügen, werden Hydraulikzylindersysteme für eine Tiefensteuerung bei Feldarbeitsbetrieb und für die Einstellung einer ausreichenden Bodenfreiheit beim Transportbetrieb verwendet. Einige Tiefensteuersysteme, wie beispielsweise in der US-A-3,663,032 beschrieben, verwenden in Serie liegende, miteinander im Einklang arbeitende Zylinder, um die Rahmenteile übereinstimmend anzuheben oder abzusenken. Dabei fährt ein auf dem Arbeitsgerät angeordnetes Durchflußsteuerventil die in Serie miteinander verbundenen Zylinder gemeinsam aus oder ein. Für einen richtigen Zylinderbetrieb müssen deren Kapazitäten und Zylinderhübe sorgfältig aufeinander abgestimmt werden. Desweiteren führen Undichtigkeiten bei den Kolbendichtungen eines oder mehrerer Zylinder dazu, daß die Zylinder außer Phase geraten können, was einen uneinheitlichen Betrieb über die Breite des Arbeitsgeräts zur Folge hat. Um die Zylinder miteinander in Einklang zu bringen, muß das Arbeitsgerät normalerweise vollständig angehoben werden, was Zeitverluste und Minderungen der Leistungsfähigkeit zur Folge haben kann.

Andere Systeme vertrauen auf Tiefenanschläge, um die Betriebshöhe zu steuern. Sie erlauben es der Bedienungsperson jedoch nicht, die Höhe von der Kabine aus zu ändern oder für unterschiedliche Transportbedingungen, Bodenkonturen und Bodenbeschaffenheiten die Tiefe auf einfache Weise zu verändern. Um die Höhe der seitlichen Flügelrahmen relativ zum Haupt- oder Mittelrahmen einzustellen, erfordern sowohl die Systeme mit in Serie angeordneten Zylindern als auch die mechanischen Tiefenanschlagssysteme mechanische Einstellung, die außerhalb der Fahrerkabine vorgenommen werden müssen. Die genaue Niveausteuerung zur Nivellierung oder zum Verstellen der Rahmenneigung in Fahrtrichtung sowie zur seitlichen Nivellierung bereitet Schwierigkeiten.

Bei Anbaugeräterahmen, die einen Hauptrahmen und getrennte Flügelrahmen aufweisen, weicht die Eindringtiefe der Flügelrahmenabschnitte häufig von der des Hautrahmens ab, ohne daß die Zylinderanordnung eine einfache und zuverlässige Einstellung der Flügelrahmenabschnitte relativ zum Hauptrahmen erlaubt. Der Hub und die Größe der Flügelrahmenzylinder hängen häufig eher von dem Erfordernis ab, daß die Zylinder zusammenpassen müssen, als von der Hubkapazität und den räumlichen Bedingungen. Daher sind die Zylinder weder die am besten angepaßten noch die wirtschaftlichsten.

Die US-A-4,413,685 beschreibt eine Maisdrillmaschine mit mehreren individuellen Reihenpflanzeinheiten, welche jede gesondert an einem Tragrahmen angelenkt sind. Der gemeinsame Tragrahmen ist mittels einer primären Hebe-Senk-Vorrichtung an einem Traktor befestigt und läßt sich durch diesen heben und senken. Jede Reihenpflanzeinheit besitzt je einen Rahmen, der sich über zwei Tragräder auf dem Boden abstützt. Durch jeweils einen Zylinder, der auf einen Einstellhebel einwirkt, lassen sich die Räder relativ zur zugehörigen Reihenpflanzeinheit einstellen, um die Reihenpflanzeinheit in Abhängigkeit einer Bedienungsvorgabe anzuheben und abzusenken. Durch einen Meßanordnung mit Potentiometer läßt sich die Lage des Einstellhebels erfassen und über ein Display anzeigen.

Die der Erfindung zugrunde liegende Aufgabe wird darin gesehen, ein verbessertes Hub- und Tiefensteuersystem für Anbaugeräte der eingangs genannten Art anzugeben, durch welches einige oder alle der vorgenannten Probleme überwunden werden. Insbesondere soll das Hub- und Tiefensteuersystem eine genaue Tiefensteuerung und einen genauen Höhenausgleich über die ganze Arbeitsgerätebreite ermöglichen. Im Einklang miteinander arbeitende Bauelemente, insbesondere aufeinander abgestimmte Hubzylinder, und mechanische Anschläge sollen dabei entbehrlich sein, und die Steuerung soll auch dann funktionsfähig bleiben, wenn Zylinderleckagen auftreten. Es soll eine einfache Einstellung und Justage von der Fahrerkabine des ziehenden Fahrzeugs aus möglich sein. Die Flexibilität und Einstellbarkeit soll gegenüber bekannten Hub- und Tiefensteuersystemen wesentlich gesteigert werden. Es sollen optimal ausgewählte Zylinder auch von verschiedener Größe und mit unterschiedlichem Kolbenhub ausgewählt werden können. Das Hub- und Tiefensteuersystem soll insbesondere für Anbaugeräterahmen mit Haupt- und Flügelrahmen geeignet sein und es ermöglichen, das ein Bereich des Anbaugeräterahmens, beispielsweise ein Flügelrahmenabschnitt, auf andere Weise angesteuert wird, als ein anderer Rahmenabschnitt, wie beispielsweise ein Mittelrahmenabschnitt. Das System soll die relative Einstellung der Hubzylinder erleichtern und die Verwendung unabhängig gesteuerter Hubzylinder, die relativ zueinander von der Fahrzeugkabine aus einstellbar sind, ermöglichen. Es soll die Einstellung der Rahmenneigung sowohl in Fahrtrichtung als auch in der Querrichtung möglich sein.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor. Die Lösung bringt die aus der Aufgabenstellung resultierenden Vorteile mit sich.

Das erfindunggemäße Hub- und Tiefensteuersystem enthält mehrere unabhängig voneinander elektrohydraulisch einstellbare Zylinder, die zueinander beabstandet auf einem Werkzeugrahmen angeordnet sind und mit einer Radhubeinrichtung verbunden sind. Eine in der Fahrerkabine des ziehenden Fahrzeugs angeordnete Arbeitsgerätesteuereinheit (ICU) ist mit Rückkopplungs-Potentiometern oder ähnlichen Meßwandlern zur Erfassung der Zylinderhublänge oder der Aufhängelage verbunden. Die Rückführungs- oder Istwertsignale werden in der ICU mit wenigstens einem Steuersignal verglichen, welches von der Bedienungsperson durch Verstellen (Verdrehen) eines Hebels oder eines Drehknopfes an einer Bedienungssteuereinheit in der Fahrerkabine einstellbar ist. In Abhängigkeit der Zylinderposition relativ zu der durch die Bedienungsperson ausgewählten Position liefert die ICU ein Ausgangssignal an wenigstens ein elektrohydraulisches Ventil, um einen proportionalen Durchflußbetrag für die gewünschte Zylinderposition einzustellen. Die ICU vergleicht auch die Rückführungssignale der Meßwandler untereinander und paßt die Ausgangsspannungen für jedes Ventil an, so daß der Rahmen gleichmäßig angehoben und abgesenkt werden kann. Unter Bedingungen, bei denen eine unabhängige Einstellung der unterschiedlichen Rahmenabschnitte gewünscht wird, kann die Bedienungssteuereinheit betätigt werden, um das erforderliche Versatz- oder Offset-Signal für jeden Rahmenabschnitt zu liefern. Das Hubsystem ermöglicht selbst mit ungleichen Zylindern, die verschiedene Kapazitäten und Hublängen haben, eine einheitliche Tiefensteuerung und ein abgestimmtes Anheben. Die Steuerung der Rahmenneigung und der Tiefe kann sowohl bezüglich der Fahrtrichtung als auch quer dazu erfolgen.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Aufsicht auf den Rahmenbereich eines Ackerbau-Arbeitsgeräts mit einem Hubsteuersystem,
- Fig. 2: das schematische Diagramm eines Hubsteuersystems für ein Ackerbau-Arbeitsgerät gemäß Fig. 1,
- Fig. 3: das schematisches Diagramm eines alternativen Ventils für den in Fig. 2 dargestellten Steuerkreis und
- Fig. 4: die Explosionsdarstellung eines Gestänges mit einem Meßwandler, der in einem Arbeitsgerät gemäß Fig. 1 Verwendung finden kann.

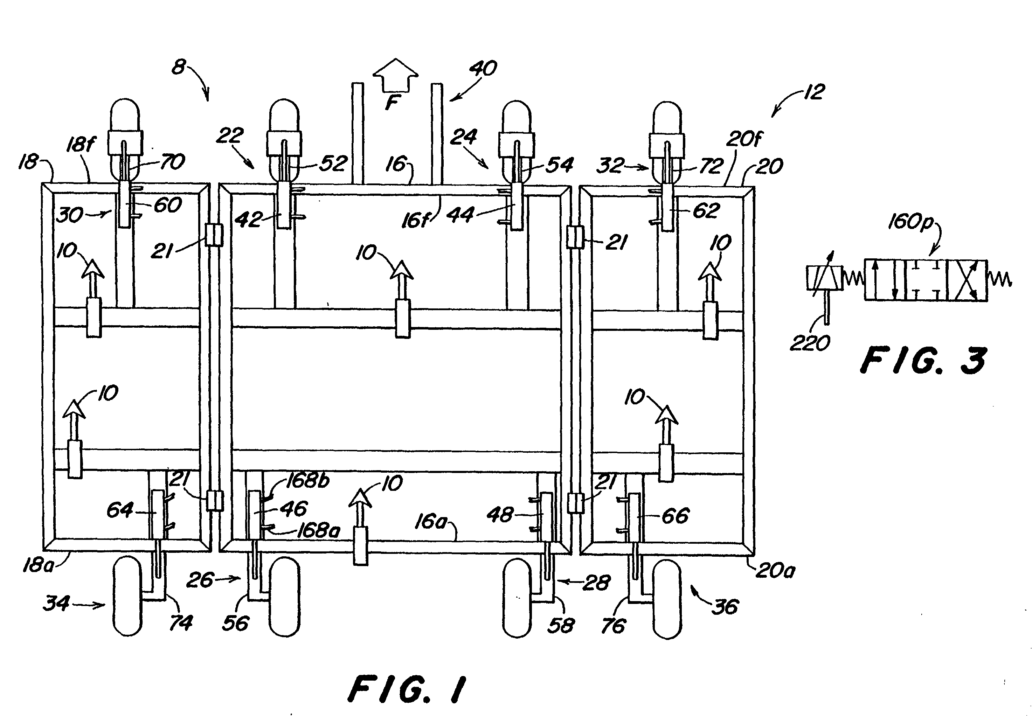

Aus Fig. 1 geht ein Anbaugerät 8 mit Bodenbearbeitungswerkzeugen 10, die von einem sich quer erstreckenden Rahmen 12 getragen werden, hervor. Der Rahmen 12 enthält einen Mittelrahmen 16 und zwei Flügelrahmen 18, 20. Letztere sind über Gelenkstellen 21 derart an dem Mittelrahmen 16 befestigt, daß sie sich um eine in Fahrtrichtung verlaufende Achse relativ zum Mittelrahmen 16 verschwenken lassen.

Mit einem vorderen Abschnitt 16f des Mittelrahmens 16 sind erste und zweite, vordere Hubeinrichtungen 22, 24 verbunden, die dem Mittelrahmen 16 zugeordnet sind. Mit einem hinteren Abschnitt 16a des Mittelrahmens 16 sind ebenfalls erste und zweite, hintere Hubeinrichtungen 26, 28 verbunden, die dem Mittelrahmen 16 zugeordnet sind. Die vorderen Abschnitte 18f bzw. 20f der Flügelrahmen 18 und 20 tragen vordere Hubeinrichtungen 30 und 32. Die hinteren Abschnitte 18a bzw. 20a der Flügelrahmen 18 und 20 tragen hintere Hubeinrichtungen 34 und 36. Die Hubeinrichtungen sind jeweils Bestandteil zugehöriger Radbaugruppen. Insgesamt weist das Arbeitsgerät 8 vier vordere und vier hintere Radbaugruppen auf. Um das Anbaugerät 10 nach vorn (F) über ein Feld zu ziehen, trägt der vordere Abschnitt 16f des Mittelrahmens 16 eine Anbauanordnung 40, die der gelenkigen Befestigung an einem nicht gezeigten Traktor dient.

Die Hubeinrichtungen 22, 24, 26 und 28 enthalten doppeltwirkende Zylinder 42, 44, 46 und 48, die mit gelenkig am Mittelrahmen 16 befestigten Radtragarmen 52, 54, 56 bzw. 58 verbunden sind. Die Hubeinrichtungen 30, 32, 34 und 36 enthalten doppeltwirkende Zylinder 60, 62, 64 und 66, die mit gelenkig an den Flügelrahmen 18 bzw. 20 befestigten Radtragarmen 70, 72, 74 bzw. 76 verbunden sind. Beim Ausfahren der Zylinder wird der zugehörige Rahmenteil relativ zum Boden angehoben. Beim Einfahren der Zylinder wird der zugehörige Rahmenteil relativ zum Boden abgesenkt.

Durch die Hubeinrichtungen läßt sich der Rahmen 12 zwischen einer angehobenen Transportstellung, in der die Werkzeuge 10 einen bestimmten Abstand zum Boden einnehmen, und einer abgesenkten Bodenbearbeitungsstellung, in der die Werkzeuge 10 in den Boden eindringen, bewegen. In der Bodenbearbeitungsstellung lassen sich die Radzylinder ausfahren bzw. einfahren, um die Eindringtiefe der Werkzeuge 10 zwischen einer oberen Schabestellung und der tiefsten Eindringstellung einzustellen. Bei jeder Rahmenstellung lassen sich die Radzylinder einstellen, um die Position der Flügelrahmen 18, 20 relativ zur Position des Mittelrahmens 16 einzustellen und um den Rahmen 12 waagerecht auszurichten oder die Höhe der Rahmenteile 16, 18, 20 von einer Seite zur anderen und/oder von vorn nach hinten zu variieren.

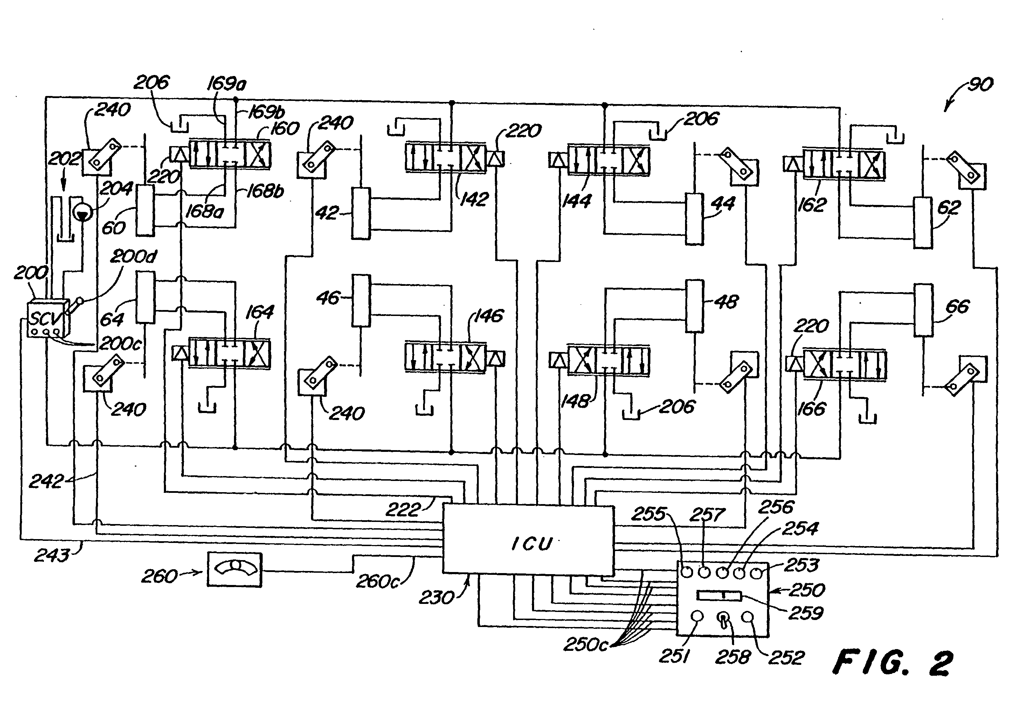

In Fig. 2 ist eine Hubsteuereinrichtung 90 für das Arbeitsgerät 8 dargestellt. Die Hubsteuereinrichtung 90 enthält individuelle elektrohydraulische Steuerventile 142, 144, 146 und 148, die mit den Mittelrahmen-Hubzylindern 42, 44, 46 und 48 in Verbindung stehen und diese steuern, um die Ausrichtung des Mittelrahmens 16 relativ zum Boden einzustellen. Elektromagnetische Ventile 160, 162, 164 und 166 sind mit den Flügelrahmen-Hubzylindern 60, 62, 64 und 66 verbunden und steuern diese, um die Ausrichtung der Flügelrahmen 18, 20 relativ zum Boden einzustellen. Wie aus Fig. 2 hervorgeht, handelt es sich bei den Ventilen 142 - 148 und 160 - 166 um drei-Positionen/vier-Wege-Ventile, deren Auslaßöffnung 168a und 168b mit den Kolben- bzw. Ringkammern und den Stirn- bzw. Druckkammern der ihnen zugeordneten Zylinder 42 - 48 und 60 - 66 verbunden sind. Die Einlaßöffnungen 169a und 169b der Ventile sind über ein Auswahlsteuerventil (SCV) 200 mit einer Hydraulikdruckquelle 202 des ziehenden Fahrzeugs (Traktors) verbunden. Die Hydraulikdruckquelle 202 enthält eine unter Druck stehende mit einer Pumpe 204 verbundene Leitung und eine Leitung die zu einem Sumpf oder Vorratsbehälter 206 führt. Die Einlaßöffnung 169b jedes Ventils 142 - 148 und 160 - 166 steht über das SCV 200 mit der Pumpe 204 in Verbindung. Bei dem SCV handelt es sich vorzugsweise um ein im Handel erhältliches, in der 8000-er Traktorserie von John Deere verwendetes SCV mit der Teilenummer RE67869.

Jedes der elektrohydraulischen Steuerventile 142 - 148 und 160 - 166 enthält einen Steuerterminal 220, der mit einem separaten Ausgangsanschluß 222 einer Arbeitsgeräte-Steuereinheit (ICU) 230 verbunden ist. Die ICU 230 liefert ein gesondertes Steuersignal an jedes der Ventile, um die zugehörigen Zylinder anzusteuern. Durch ein an ein Steuerterminal 220 angelegtes Hubsignal wird das Ventil aus seiner in Fig. 2 dargestellten, neutralen, gesperrten Position nach rechts bewegt, wodurch die Druckkammer des Zylinders über die Leitung 168b mit Druck versorgt und die Ringkammer des Zylinders über die Leitung 168a mit dem Vorratsbehälter verbunden wird. Hierbei wird der Zylinder ausgefahren, und die zugehörige Hubeinrichtung hebt den zugehörigen Bereich des Rahmens 12 relativ zum Boden an. Ein an das Steuerterminal 220 angelegtes Senksignal bewegt das Ventil zur entgegengesetzten Seite, wodurch die Ringkammer des Zylinders mit Druck versorgt und die Druckkammer des Zylinders mit dem Vorratsbehälter verbunden wird. Hierbei wird der Zylinder eingefahren, und die zugehörige Hubeinrichtung senkt den zugehörigen Bereich des Rahmens 12 relativ zum Boden ab. Wenn kein Hub- oder Senksignal am Steuerterminal 220 anliegt, bleibt das Ventil in seiner dargestellten neutralen Sperrstellung. Dabei wird die gegebene Zylinderstellung beibehalten, und die Rahmenposition relativ zum Boden bleibt unverändert.

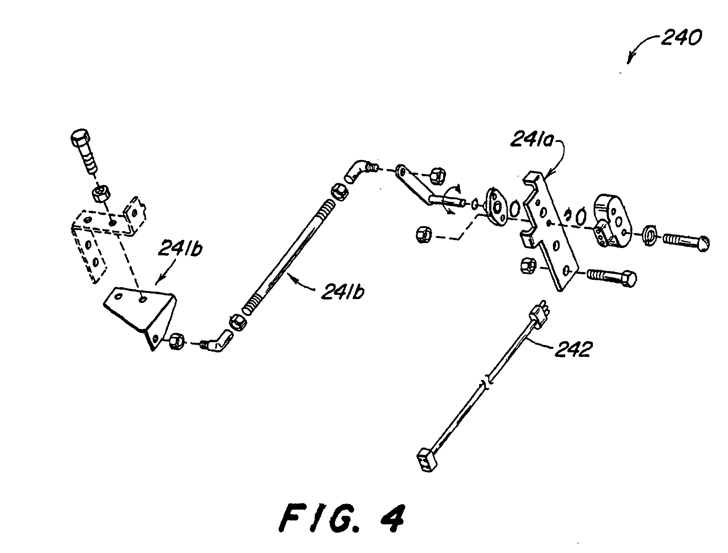

Wie aus Fig. 2 ersichtlich, werden die Ventile ein- und abgeschaltet, um den erforderlichen Durchfluß zu den zugehörigen Zylindern bereitzustellen und die gewünschten Zylinderpositionen zu erreichen. Es können jedoch auch Proportionalventile, wie sie bei 160P in Fig. 3 dargestellt sind, verwendet werden, um den Durchfluß zu und von den Zylindern einzustellen und die gewünschten Zylinderpositionen zu erreichen. Der Durchfluß zu jedem Zylinder kann hierbei proportional zu der Differenz zwischen der tatsächlich gemessenen und der gewünschten Lage der Radeinrichtung eingestellt werden. Die Proportionalventile 160p ermöglichen einen gleichmäßigeren, ruhigeren Betrieb als die in Fig. 2 dargestellten Ein-Aus-Ventile 160.

Jeder Hubeinrichtung 22 - 28 und 30 - 36 ist ein Meßwandler 240, insbesondere mit Rückkopplungs-Potentiometer, zugeordnet (Figuren 2 und 4), welcher ein Rückführungssignal V1 liefert, das entweder der Zylinderhublänge oder der Position der durch den Zylinder betätigten Hubeinrichtung entspricht. Der Meßwandler 240 enthält eine an dem Rahmenteil befestigte Wandlerhalterung 241a und mit der Hubeinrichtung verbundene Verbindungsteile 241b, die sich mit der Hubeinrichtung mitbewegen und auf das Ausfahren oder Einfahren des zugehörigen Hubzylinders reagieren. Jeder Meßwandler 240 steht über eine Leitung 242 mit einem separaten Eingangsanschluß 222 der ICU 230 in Verbindung.

Bei der ICU 230 handelt es sich vorzugsweise um einen Controller-Typ, wie er für die Ansteuerung des oben genannten bekannten SCV verwendet wird, wobei der Controller ICU angepaßt ist, um die zusätzlichen Analogeingangsignale der Meßwandler 240 zur Steuerung der individuellen Hubzylinder lesen zu können. Es wird auch ein Ventilsteuersignal von der ICU 230 über die Leitung 243 an die Steuereinheit (Controller) des SCV 200 geliefert. Das SCV 200 wird von der ICU 230, durch konventionelle Einstellelemente 200c und durch einen üblichen SCV-Hebel 200d gesteuert.

Die ICU 230 vergleicht für jede Hubeinrichtung die Spannung V1 auf der Leitung 242 des Meßwandlers 240 mit einem gewünschten Spannungssignal V2. Desweiteren vergleicht die ICU 230 die Spannungssignale jeder Hubeinrichtung mit den Spannungssignalen der anderen Hubeinrichtungen, um das Arbeitsgerät gleichförmig anheben oder absenken und jede gewünschte Nivellierung und Neigungsfunktion bereitstellen zu können. Die ICU 230 erhält die gewünschte Spannung über Leitungen 250c von einer Bedienungssteuereinheit (OCU) 250 in der Fahrerkabine des Traktors sowie von einer Neigungssteuerung 260, die über die Leitung 260c mit der ICU 230 verbunden ist und eine Einstellung der Neigung des Rahmens 12 in Fahrtrichtung ermöglicht.

Die OCU 250 enthält ein Hebelreferenz-Bedienelement 251 und ein Nullreferenz-Bedienelement 252. Durch ein Tiefen-Bedienelement 253 und ein Zwischentiefen-Bedienelement 254 läßt sich die Arbeitstiefe in der Bodenbearbeitungsstellung einstellen. Ein Offset-Bedienelement 255 für den rechten Flügelrahmen und ein Offset-Bedienelement 256 für den linken Flügelrahmen ermöglichen die Einstellung der Flügelrahmen 18, 20 relativ zum Mittelrahmen 16. Durch ein Niveauzentrier-Bedienelement 257 läßt sich die Höhe der linken Seite des Mittelrahmens 16 relativ zur Höhe der rechten Seite des Mittelrahmens 16 einstellen. Ein Aktivierungsschalter 258 ermöglicht das Nachjustieren der Positionen. Auf einer digitalen Anzeige 259 wird die durch das Bedienelement 253 gewählte Tiefe angezeigt. Die Bedienelemente 253 - 257 enthalten vorzugsweise Drehknöpfe mit verstellbaren Widerständen. Die Drehknöpfe können Raststellungen für unterschiedliche Betriebsbedingungen und für eine einfache Rückkehr zu einer vorgewählten Niveaueinstellung, nachdem durch das Offset-Bedienelement eine besondere Stellung eingestellt worden war, aufweisen.

Die Kippsteuerung 260 liefert eine Offset-Spannung für die gewünschte Position der Vorderradbaugruppe relativ zur Hinterradbaugruppe, durch die sich die Neigung des Rahmens 12 in Fahrtrichtung leicht einstellen läßt. Es kann beispielsweise wünschenswert sein, daß die vorderen Werkzeuge 10 mit einer anderen Eindringtiefe betrieben werden, als die hinteren Werkzeuge 10, insbesondere wenn unterschiedliche Werkzeugsätze vorne und hinten am Arbeitsgerät 8 montiert sind. Außerdem kann ein Verschwenken des Rahmens wünschenswert sein, um für den Transport die Sicherheitsabstände zu vergrößern.

Das Zwischentiefen-Bedienelement 254 läßt sich betätigen, um den Rahmen 12 in eine Position zu bewegen, in der die Werkzeuge 10 lediglich schabend in den Boden eingreifen, wenn beispielsweise Radspuren entfernt werden sollen, ohne daß eine tiefe Kultivierstellung eingenommen wird, oder beim Wenden, bei dem die Werkzeuge nicht vollständig aus dem Boden ausgehoben werden müssen. Das Zwischentiefen-Bedienelement 254 ist auch nützlich, wenn das Arbeitsgerät über Bodenunebenheiten, wie beispielsweise Bodenfalten oder Wasserläufe, bewegt wird.

Nachdem die Bedienungsperson das Arbeitsgerät 8 an dem Traktor angebaut und die Hydraulikleitungen sowie die elektrischen Steuerleitungen zwischen Arbeitsgerät 8 und Traktor angeschlossen hat, wird für den Betrieb die SCV-Einrichtung aktiviert, wobei das Anbaugerät 8 auf eine ebene Fläche gefahren wurde. Der SCV-Hebel 200d wird bewegt, um die Räder des Anbaugeräts 8 vom Boden abzuheben. Dann wird der SCV-Hebel 200d in die Schwimmstellung gebracht, so daß die Radbaugruppen auf die ebene Fläche aufsetzen. Die Bedienungsperson drückt dann das Hebelreferenz-Bedienelement 251, um die Spannungsreferenzniveaus für die Meßwandler 240, die den Niveaureferenzpositionen entsprechen, festzusetzen. Das Arbeitsgerät 8 wird dann angehoben und auf das Feld gefahren, wo der Rahmen 12 abgesenkt wird bis die Werkzeuge 10 in Kontakt mit dem Boden kommen. Dann wird das Nullreferenz-Bedienelement 252 gedrückt, um den Nullniveaureferenz für die besonderen Feldbedingungen festzusetzen. Die Bedienungsperson dreht dann den Tiefeneinstellungs-Knopf 253 bis die gewünschte Arbeitstiefe auf der digitalen Anzeige 259 angezeigt wird. Anfangs befinden sich die Offset-Bedienelemente 255 und 256 für den rechten und den linken Flügelrahmen sowie das Niveauzentrier-Bedienelement 257 in ihren jeweiligen Rastpositionen, die einem ebenen Betrieb entsprechen.

Der SCV-Hebel 200d wird betätigt und die Radbaugruppen senken den Rahmen 12 mit Hilfe der Steuerung der ICU 230 ab. Die ICU 230 empfängt dabei die Meßwandler-Spannungssignale und steuert die individuellen elektrohydraulischen Ventile, um die Zylinder einzufahren und eine gleichmäßige Absenkung herbeizuführen. Wenn das Arbeitsgerät 8 auf dem Feld arbeitet, können die Offset-Bedienelemente 255 und 256 aus ihrer Raststellung bewegt werden, um eine Offset-Spannung einzustellen, welche zur besseren Niveaueinstellung die Flügelrahmen 18 oder 20 unabhängig von dem Mittelrahmen 16 anhebt oder absenkt. Wenn aus irgendeinem Grund eine Seite des Mittelrahmens 16 auf einem anderen Niveau arbeitet als die gegenüberliegende Seite, kann das Niveauzentrier-Bedienelement 257 in eine Richtung zum Nivellieren der Bereiche verdreht werden, wobei eine Offset-Spannung bereitgestellt wird, durch die die Position der Radbaugruppen 22, 26 der einen Seite relativ zu den Radbaugruppen 24, 28 der anderen Seite geändert wird. Wenn die Bedienungsperson die Arbeitstiefe der hinteren Werkzeuge 10 relativ zu der Arbeitstiefe der vorderen Werkzeuge 10 ändern will, verstellt sie einfach die Kippsteuerung 260, um eine Offset-Spannung für die Meßwandler 240 der vorderen Radbaugruppen 22, 24, 26, 28 relativ zu den Meßwandlern der hinteren Radbaugruppen 26, 28, 34, 36 bereitzustellen.

Wird eine Zwischentiefensteuerung gewünscht, beispielsweise für ein Wendemanöver oder für das Durchfahren eines Wasserlaufs, kann die Bedienungsperson einfach das Zwischentiefen-Bedienelement 254 aktivieren. Es können auch Mehrfachrastungen bei den Tiefeneinstellungs-Bedienelementen 253 und 254 vorgesehen sein, um für unterschiedliche Bedingungen einfach auswählbare Arbeitstiefen festzusetzen.

Um das Arbeitsgerät 8 auszuheben, wählt die Bedienungsperson am SCV 200 die Hubfunktion. Das Rückkoppelsystem stellt dann sicher, daß die Zylinder im wesentlichen im Gleichklang ausfahren, um das Arbeitsgerät gleichmäßig in ebener Lage anzuheben. Zur Verbesserung der Transportstabilität und zur Erhöhung der Bodenfreiheit kann die Kippsteuerung 260 in der angehobenen Position betätigt werden. Das Aktivierungs-Bedienelement 258 stellt damit eine Bezugsebenenrückstellung sowie eine Übersteuerung des normalen SCV-Betriebs, bei dem keine Tiefen- und Offset-Steuerung ausgeführt wird, bereit.

Anstelle der gezeigten acht Radbaugruppen kann eine andere Anzahl von Radbaugruppen verwendet werden. Es kann beispielsweise für einige Arbeitsgeräte wünschenswert sein, nur zwei Radbaugruppen auf einem Mittelrahmen 16 und eine einzige Radbaugruppe auf jedem Flügelrahmen zu haben. Verschiedene Zylinder mit unterschiedlichen Ausschublängen und verschiedene Radbaugruppen können leicht durch die ICU 230 und die Meßwandler 220 in Übereinstimmung gebracht werden.

## Patentansprüche

1. Hub- und Tiefensteuersystem für ein an eine Zugmaschine anhängbares landwirtschaftliches Arbeitsgerät (8), wobei das Steuersystem einen sich quer zur Fahrtrichtung erstreckenden Werkzeuge (10) tragenden Rahmen (12) und mehrere in Längs- und Querrichtung zueinander beabstandete Hubeinrichtungen (22, 24, 26, 28, 30, 32, 34, 36) für Radbaugruppen zum Anheben und Absenken des Rahmens (12) aufweist, wobei das Steuersystem mit den Hubeinrichtungen (22 - 36) gekoppelte Hydraulikzylinder (42, 44, 46, 48, 60, 62, 64, 66) und Steuerventile (142, 144, 146, 148, 160, 162, 164, 166) enthält, die mit den Hydraulikzylindern (42 - 48, 60 - 66) und mit einer Hydraulikdruckquelle (204) in Verbindung stehen, um wahlweise die Hydraulikzylinder (42 - 48, 60 - 66) aus- und einzufahren und damit die Hubeinrichtungen (22 - 36) zu veranlassen, den Rahmen (12) anzuheben oder abzusenken, **gekennzeichnet durch** Meßwandler (240), die auf den Betrieb der Hubeinrichtungen (22 - 36) ansprechen und von der Rahmenposition abhängige Ausgangssignale liefern, und **durch** eine Steuereinheit (230), die mit der Steuerventilanordnung (142 - 148, 160 - 166) und den Meßwandlern (240) in Verbindung steht und in Abhängigkeit der Ausgangssignale der Meßwandler (240) die Hydraulikzylinder (42 - 48, 60 - 66) individuell ansteuert, um den Rahmen (12) in eine vorwählbare Position relativ zum Boden einzustellen.

2. Steuersystem nach Anspruch 1, **dadurch gekennzeichnet, daß** die Steuereinheit (230) elektronisch arbeitet und daß die Steuerventile elektrohydraulische Ventile (142 - 148, 160 - 166) sind, die jeweils zwischen der Hydraulikdruckquelle (204) und einem der Hydraulikzylinder (42 - 48, 60 - 66) angeschlossen sind.

3. Steuersystem nach Anspruch 2, **dadurch gekennzeichnet, daß** die Steuerventile elektrohydraulische Umschaltventile (142 - 148, 160 - 166) zum Ein- und Ausschalten eines Flüssigkeitsstroms und/oder Proportionalventile (160p), die den Durchfluß in Abhängigkeit der Ausgangssignale der Meßwandler (240) steuern, sind.

4. Steuersystem nach einem der Ansprüche 1 bis 3, **dadurch gekennzeichnet, daß** die Ausgangsspannungen der Meßwandler (240) von der Ausdehnung der Hydraulikzylinder (42 - 48, 60 - 66) oder von der Lage eines Abschnitts der jeweiligen Hubeinrichtung (22 - 36) abhängen.

5. Steuersystem nach einem der Ansprüche 1 bis 4, **dadurch gekennzeichnet, daß** eine Bedienungssteuereinheit (250) mit durch eine Bedienungsperson betätigbaren Eingabeelementen (251, 251, 253, 254, 255, 256, 257) zur Vorgabe von Steuersignalen an die Steuereinheit (230) und von Niveausignalen für das Arbeitsgerät (8) vorgesehen ist.

6. Steuersystem nach Anspruch 5, **dadurch gekennzeichnet, daß** die Bedienungssteuereinheit (250) Steuerelemente enthält, durch die sich die Lage eines zu einer Hubeinrichtung benachbarten Werkzeugs unabhängig von der Lage eines anderen zu einer anderen Hubeinrichtung benachbarten Werkzeug wahlweise-einstellen läßt.

7. Steuersystem nach einem der Ansprüche 1 bis 6, **dadurch gekennzeichnet, daß** eine Offset-Steuerung vorgesehen ist, durch die ausgewählte Bereiche des Rahmens (12) relativ zueinander auf unterschiedlichen Positionen gehalten werden können.

8. Steuersystem nach einem der Ansprüche 1 bis 7, **dadurch gekennzeichnet, daß** vordere Hubeinrichtungen (22, 24, 30, 32) und hintere Hubeinrichtungen (26, 28, 34, 36) vorgesehen sind und eine Offset-Steuerung eine Einstellmöglichkeit des vorderen Rahmenbereichs (16f, 18f, 20f) relativ zum hinteren Rahmenbereich (16a, 18a, 20a) bereitstellt.

9. Steuersystem nach einem der Ansprüche 1 bis 8, **dadurch gekennzeichnet, daß** für ein Arbeitsgerät (8) mit einem Mittelrahmen (16) und wenigstens einem gelenkig daran befestigten seitlichen Flügelrahmen (18, 20) eine Offset-Steuerung einstellbar ist, um die Arbeitstiefe des Flügelrahmens (18, 20) relativ zu der des Mittelrahmens (16) zu variieren.

10. Steuersystem nach einem der Ansprüche 1 bis 9, **dadurch gekennzeichnet, daß** eine Neigungswinkelsteuerung zur Einstellung des vorderen Rahmenbereichs (16f, 18f, 20f) relativ zum hinteren Rahmenbereich (16a, 18a, 20a) vorgesehen ist.

11. Steuersystem nach einem der Ansprüche 1 bis 10, **dadurch gekennzeichnet, daß** eine Tiefensteuerung zur Einstellung einer normalen Arbeitstiefe bei Feldarbeiten und/oder eine Zwischentiefensteuerung zur Einstellung einer Tiefenabweichung zur normalen Arbeitstiefe vorgesehen ist.

12. Steuersystem nach Anspruch 11, **dadurch gekennzeichnet, daß** die Tiefensteuerung und/oder die Zwischentiefensteuerung wenigstens eine Rastauswahleinrichtung enthält.

13. Steuersystem nach einem der Ansprüche 1 bis 12, **dadurch gekennzeichnet, daß** eine Nivelliersteuerung zur Einstellung des Niveaus einer Rahmenseite relativ zum Niveau der anderen Rahmenseite und/oder relativ zum Niveau eines Mittelrahmens (16) vorgesehen ist.

14. Steuersystem nach einem der Ansprüche 1 bis 13, **dadurch gekennzeichnet, daß** eine Neigungswinkelsteuerung vorgesehen ist, durch die sich die Eindringtiefe der vorderen Werkzeuge (10) relativ zur Eindringtiefe der hinteren Werkzeuge (10) variieren läßt.

15. Steuersystem nach einem der Ansprüche 1 bis 14, **dadurch gekennzeichnet, daß** eine Nullreferenzsteuerung zur Festlegung eines Referenzniveaus für die Eindringtiefe eines am Rahmen (12) befestigten Werkzeugs (10) vorgesehen ist.

16. Steuersystem nach einem der Ansprüche 1 bis 15, **dadurch gekennzeichnet, daß** eine Referenzniveausteuerung zur Festlegung einer Rahmenniveaubedingung vorgesehen ist.

## Claims

1. A lift and depth control system for an agricultural implement (8) which can be attached to a towing machine, wherein the control system comprises a frame (12) extending transverse to the direction of travel carrying tools (10), and a plurality of lift devices (22, 24, 26, 28, 30, 32, 34, 36) spaced from one another in the longitudinal and transverse directions, for wheel assemblies for raising and lowering the frame (12), wherein the control system includes hydraulic cylinders (42, 44, 46, 48, 60, 62, 64, 66) coupled to the lift devices (22 - 36) and control valves (142, 144, 146, 148, 160, 162, 164, 166) which are in communication with the hydraulic cylinders (42 - 48, 60 - 66) and with a hydraulic pressure source (204), in order to selectively extend and retract the hydraulic cylinders (42 - 48, 60 - 66) and thus cause the lift devices (22 - 36) to raise or lower the frame (12), **characterized by** transducers (240) which respond to the operation of the lift devices (22 - 36) and supply output signals dependent on the frame position, and by a control unit (230) which is coupled to the control valve arrangement (142 - 148, 160 - 166) and the transducers (240) and controls the hydraulic cylinders (42 - 48, 60 - 66) individually in dependence on the output signals of the transducers (240), in order to adjust the frame (12) in a selectable position relative to the ground.

2. A control system according to claim 1, **characterized in that** the control unit (230) operates electronically and **in that** the control valves are electro-hydraulic valves (142 - 148, 160 - 166) which are each connected between the hydraulic pressure source (204) and one of the hydraulic cylinders (42 - 48, 60 - 66).

3. A control system according to claim 2, **characterized in that** the control valves are electro-hydraulic switch-over valves (142 - 148, 160 - 166) for switching a fluid stream on and off and/or proportional valves (160p) which control the throughflow in dependence on the output signals of the transducers (240).

4. A control system according to any of claims 1 to 3, **characterized in that** the output voltages of the transducers (240) are dependent on the extension of the hydraulic cylinders (42 - 48, 60 - 66) or on the position of a section of the corresponding lift device (22 - 36).

5. A control system according to any of claims 1 to 4, **characterized in that** an operator control unit (250) is provided with input elements (251, 252, 253, 254, 255, 256, 257) for presetting control signals at the control unit (230) and level signals for the implement (8).

6. A control system according to claim 5, **characterized in that** the operator control unit (250) includes control elements through which the position of a tool adjacent a lift device can be adjusted independently of the position of another tool adjacent to another lift device.

7. A control system according to any of claims 1 to 6, **characterized in that** an offset control is provided through which selected regions of the frame (12) can be held at different position relative to one another.

8. A control system according to any of claims 1 to 7, **characterized in that** front lift devices (22, 24, 30, 32) and rear lift devices (26, 28, 34, 36) are provided and an offset control provides an ability to adjust the front frame region (16f, 18f, 20f) relative to the rear frame region (16a, 18a, 20a).

9. A control system according to any of claims 1 to 8, **characterized in that**, for an implement (8) with a middle frame (16) and at least one side wing frame (18, 20) hinged thereon, an offset control is adjustable in order to vary the working depth of the wing frame (18, 20) relative to that of the middle frame (16).

10. A control system according to any of claims 1 to 9, **characterized in that** an inclination angle control is provided for adjusting the front frame region (16f, 18f, 20f) relative to the rear frame region (16a, 18a, 20a).

11. A control system according to any of claims 1 to 10, **characterized in that** a depth control is provided for adjusting a normal working depth in field work and/or an intermediate depth control for setting a deviation in depth from the normal working depth.

12. A control system according to claim 11, **characterized in that** the depth control and/or the intermediate depth control includes at least one detent selection device.

13. A control system according to any of claims 1 to 12, **characterized in that** a levelling control is provided for adjusting the level of one frame side relative to the level of the other frame side and/or relative to the level of a middle frame (16).

14. A control system according to any of claims 1 to 13, **characterized in that** an inclination angle control is provided, through which the depth of penetration of the front tools (10) relative to the depth of penetration of the rear tools (10) can be varied.

15. A control system according to any of claims 1 to 14, **characterized in that** a zero reference control is provided for setting a reference level for the depth of penetration of a tool (10) fixed on the frame (12).

16. A control system according to any of claims 1 to 15, **characterized in that** a reference level control is provided for determining a frame level command.

## Revendications

1. Système de contrôle du levage et du terrage pour un outil de travail agricole (8) attelable à un tracteur, dans lequel le système de contrôle comporte un cadre porteur d'outils (10), s'étendant transversalement à la direction du roulage, et plusieurs dispositifs de levage (22, 24, 26, 28, 30, 32, 34, 36) écartés les uns des autres dans les directions longitudinale et transversale, pour des unités à roue permettant de lever et d'abaisser le cadre (12), dans lequel le système de contrôle comporte des vérins hydrauliques (42, 44, 46, 48, 60, 62, 64, 66) et des valves de commande (142, 144, 146, 148, 160, 162, 164, 166) couplés avec les dispositifs de levage (22 - 36), qui sont en communication avec les vérins hydrauliques (42 - 48, 60 -66) et avec une source de pression (204), pour rétracter et déployer au choix les vérins hydrauliques (42 - 48, 60 - 66) et faire ainsi en sorte que les dispositifs de levage (22 - 36) lèvent ou abaissent le cadre (12), **caractérisé par** des convertisseurs de mesure (240) qui réagissent au fonctionnement des dispositifs de levage (22 - 36) et délivrent des signaux de sortie qui sont fonction de la position du cadre, et par une unité de commande (230) qui est en relation avec la disposition de valves de commande (142 - 148, 160 - 166) et les convertisseurs de mesure (240) et qui excite individuellement les vérins hydrauliques (42 - 48, 60 - 66) en fonction des signaux de sortie des convertisseurs de mesure (240) pour régler le cadre (12) dans une position qui peut être présélectionnée par rapport au sol.

2. Système de contrôle selon la revendication 1, **caractérisé en ce que** l'unité de commande (230) fonctionne électroniquement et **en ce que** les valves de commande sont des valves électro-hydrauliques (142 - 148, 160 - 166), qui sont raccordées chacune entre la source de pression hydraulique (204) et un des vérins hydrauliques (42 - 48, 60 -66).

3. Système de contrôle selon la revendication 2, **caractérisé en ce que** les valves de commande sont des valves électro-hydrauliques d'inversion (142 - 148, 160 - 166) pour la mise en et hors circuit d'un courant de liquide et / ou des valves à effet proportionnel (160p), qui commandent le débit en fonction des signaux de sortie des convertisseurs de mesure (240).

4. Système de contrôle selon l'une quelconque des revendications 1 à 3, **caractérisé en ce que** les tensions de sortie des convertisseurs de mesure (240) dépendent du déploiement des vérins hydrauliques (42 - 48, 60 -66) ou de la position d'une section du dispositif de levage (22 - 36) respectif.

5. Système de contrôle selon l'une quelconque des revendications 1 à 4, **caractérisé en ce qu'**une unité de commande de l'opérateur (250) avec des éléments d'entrée (251, 251, 253, 254, 255, 256, 257) pouvant être actionnés par un opérateur en vue de la spécification des signaux de commande à l'unité de commande (230) et des signaux de niveau pour l'outil (8).

6. Système de contrôle selon la revendication 5, **caractérisé en ce que** l'unité de commande de l'opérateur (250) contient des éléments de commande par lesquels la position d'un outil voisin d'un dispositif de levage peut se régler à volonté indépendamment de la position d'un autre outil voisin d'un autre dispositif de levage.

7. Système de contrôle selon l'une quelconque des revendications 1 à 6, **caractérisé en ce qu'**une commande de décalage est prévue, par laquelle des zones choisies du cadre (12) peuvent être maintenues à différentes position les unes par rapport aux autres.

8. Système de contrôle selon l'une quelconque des revendications 1 à 7, **caractérisé en ce que** des dispositifs de levage avant (22, 24, 30, 32) et des dispositifs de levage arrière (26, 28, 34, 36) sont prévus et **en ce qu'**une commande de décalage offre une possibilité de réglage de la zone avant du cadre (16f, 18f, 20f), par rapport à la zone arrière du cadre (16a, 18a, 20a).

9. Système de contrôle selon l'une quelconque des revendications 1 à 8, **caractérisé en ce que** pour un outil de travail (8) avec un cadre central (16) et au moins un cadre d'aile (18, 20) latéral fixé dessus de manière articulée, une commande de décalage est réglable pour faire varier la profondeur de travail du cadre d'aile (18, 20) par rapport à celle du cadre central (16).

10. Système de contrôle selon l'une quelconque des revendications 1 à 9, **caractérisé en ce qu'**une commande de l'angle d'inclinaison est prévue pour le réglage de la zone avant de cadre (16f, 18f, 20f) par rapport à la zone arrière de cadre (16a, 18a, 20a).

11. Système de contrôle selon l'une quelconque des revendications 1 à 10, **caractérisé en ce qu'**une commande de profondeur est prévue pour le réglage d'une profondeur de travail normale lors de travaux des champs et / ou une commande de profondeur intermédiaire pour le réglage d'un écart de profondeur par rapport à la profondeur de travail normale.

12. Système de contrôle selon la revendication 11, **caractérisé en ce que** la commande de profondeur et / ou la commande de profondeur intermédiaire contiennent au moins un dispositif de crans au choix.

13. Système de contrôle selon l'une quelconque des revendications 1 à 12, **caractérisé en ce qu'**une commande de nivelage est prévue pour le réglage du niveau d'un côté du cadre par rapport au niveau de l'autre côté du cadre et / ou par rapport au niveau d'un cadre central (16).

14. Système de contrôle selon l'une quelconque des revendications 1 à 13, **caractérisé en ce qu'**une commande de l'angle d'inclinaison est prévue, par laquelle on peut faire varier la profondeur de terrage des outils avant (10) par rapport à la profondeur de terrage des outils arrière (10).

15. Système de contrôle selon l'une quelconque des revendications 1 à 14, **caractérisé en ce qu'**une commande de référence zéro est prévue pour la définition d'un niveau de référence pour la profondeur de terrage d'un outil (10) fixé au cadre (12).

16. Système de contrôle selon l'une quelconque des revendications 1 à 15, **caractérisé en ce qu'**une commande de niveau de référence est prévue pour la définition d'une condition de niveau de cadre.
